# EUROPEAN PATENT SPECIFICATION

(11) **EP 2 039 535 B1**
(45) Date of publication and mention of the grant of the patent: **25.11.2009**
(21) Application number: 08016267.0
(22) Date of filing: 16.09.2008
(51) Int. Cl.: B60C 11/12

(54) **Pneumatic tire**
Luftreifen
Pneu

(30) Priority: 20.09.2007 JP 2007243890
(43) Date of publication of application: 25.03.2009
(73) Proprietor: The Yokohama Rubber Co., Ltd., Minato-ku Tokyo 105-8685 (JP)
(72) Inventor: Ebiko, Masahiro, Kanagawa 254-8601 (JP)
(74) Representative: HOFFMANN EITLE

(56) References cited:
- EP-A- 0 952 011
- EP-A- 1 552 967
- EP-A- 1 669 217
- DE-A1- 10 214 913
- JP-A- 2006 131 098
- US-A1- 2002 043 318

## Description

### TECHNICAL FIELD

The present invention relates to a pneumatic tire, and more specifically to a pneumatic tire which has a directional tread pattern and can improve a braking performance of the tire.

### BACKGROUND ART

Recently, a directional tread pattern has been widely adopted in a pneumatic tire for a sport utility vehicle from a standpoint of dressing up the vehicle. The same trend applies to a winter tire, emphasizing an aggressive feeling in a physical appearance. Besides, a demand related to a braking performance (especially an on-ice braking performance) of a tire has been growing in response to an improvement in a locomotion performance of the vehicle.

As a conventional pneumatic tire related to such challenges, a technique disclosed in Japanese Patent Application Laid-Open No. 2006-131098 has been known. The conventional pneumatic tire has, on a tread surface, a block sequence and a tread pattern which includes at least four main grooves running through the tread surface in a circumferential direction of the tire, whose rotating direction is specified, and whose actual grounding area ratio is set to be 55% to 75%. The tread pattern includes at least one rib whose width is set to be 7% to 22% of a width of the tread surface and which has a plurality of sipes each having a V shape whose head is located in the middle of the rib width and is oriented to a rotating direction of the tire with its legs stretching out respectively towards both sides of the rib.

### DISCLOSURE OF INVENTION

It is an object of the present invention to at least partially solve the problems in the conventional technology.

A pneumatic tire according to an aspect of the present invention includes: a plurality of circumferentially-formed main grooves which run on a tread part in a circumferential direction of the tire; a plurality of rag grooves which run on the tread part in a width direction of the tire; and a plurality of land parts which are formed by being zoned by the circumferentially-formed main grooves and the rag grooves on the tread part, wherein a rotating direction of the tire is specified, a plurality of sipes are formed in each of the land parts and each of the sipes has a substantially zigzag shape formed by a string of multiple V-shaped parts in a plan view of the tread part, so that a falling amount of the land parts in the rotating direction of the tire differs from that of the land parts in a reverse direction, against an outside force generated when the tire lands on a ground, and a direction of the V-shaped parts of each of the sipes is set so that the falling amount of the land parts in the rotating direction of the tire is smaller than that in the reverse direction.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

Fig. 1 is a plan view showing a tread of a pneumatic tire according to an embodiment of the present invention.
Fig. 2 is a magnified view showing a land part of the pneumatic tire shown in Fig. 1.
Fig. 3 is an explanatory view for a sipe of the pneumatic tire shown in Fig. 1.
Fig. 4 is an explanatory view for a modification of the pneumatic tire shown in Fig. 1.
Fig. 5 is an explanatory view for another modification of the pneumatic tire shown in Fig. 1.
Fig. 6 is an explanatory view for still another modification of the pneumatic tire shown in Fig. 1.
Fig. 7 is a table showing a result of a performance test for the pneumatic tires according to the embodiments of the present invention.

### BEST MODE(S) FOR CARRYING OUT THE INVENTION

Exemplary embodiments of the present invention will be explained in detail below with reference to the accompanying drawings. It should be noted that the present invention is not limited by the embodiments, constituents of the embodiments may include an element which is inherently replaceable while maintaining an identicalness of the present invention, and various modifications set forth in the embodiments can be arbitrarily combined within a scope inherently presented to those skilled in the art.

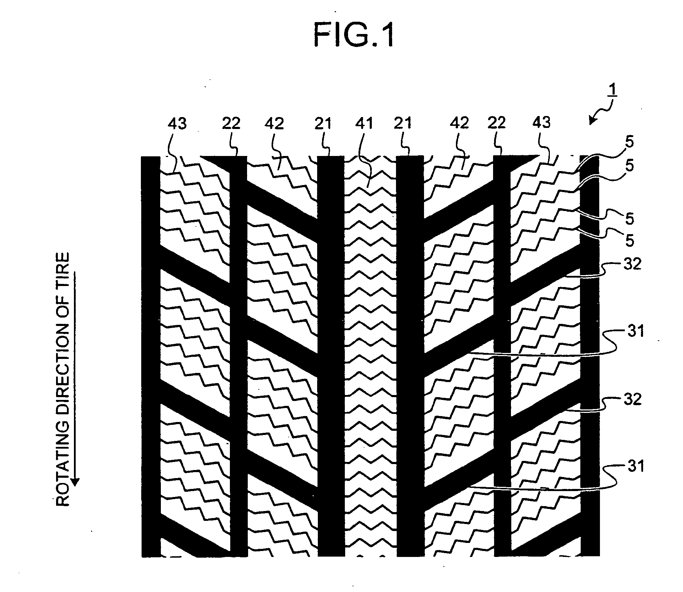

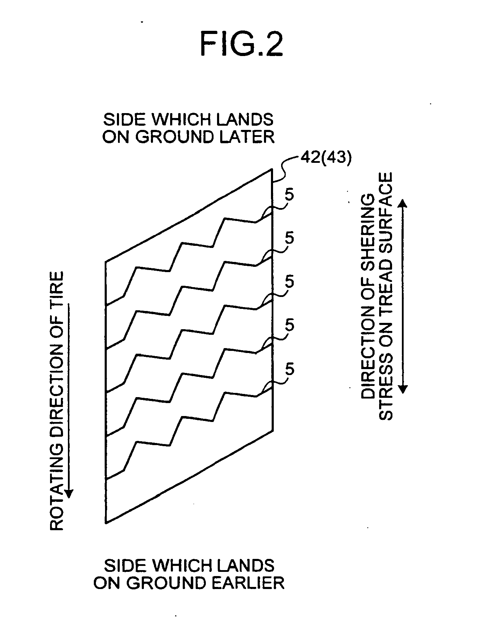

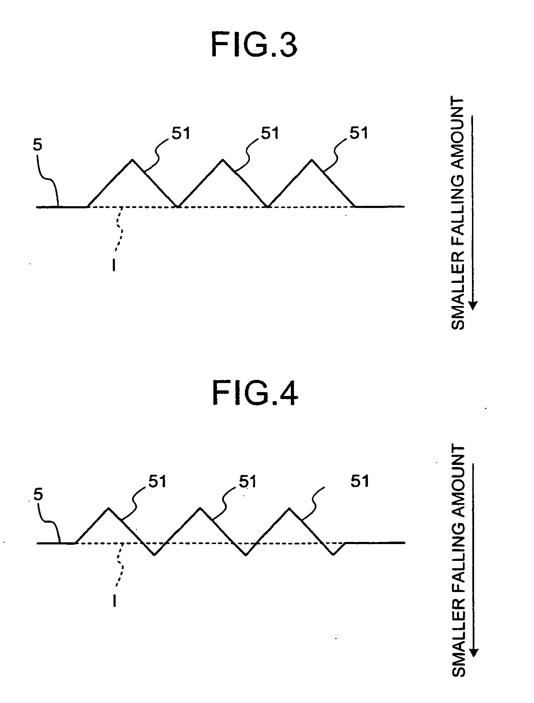

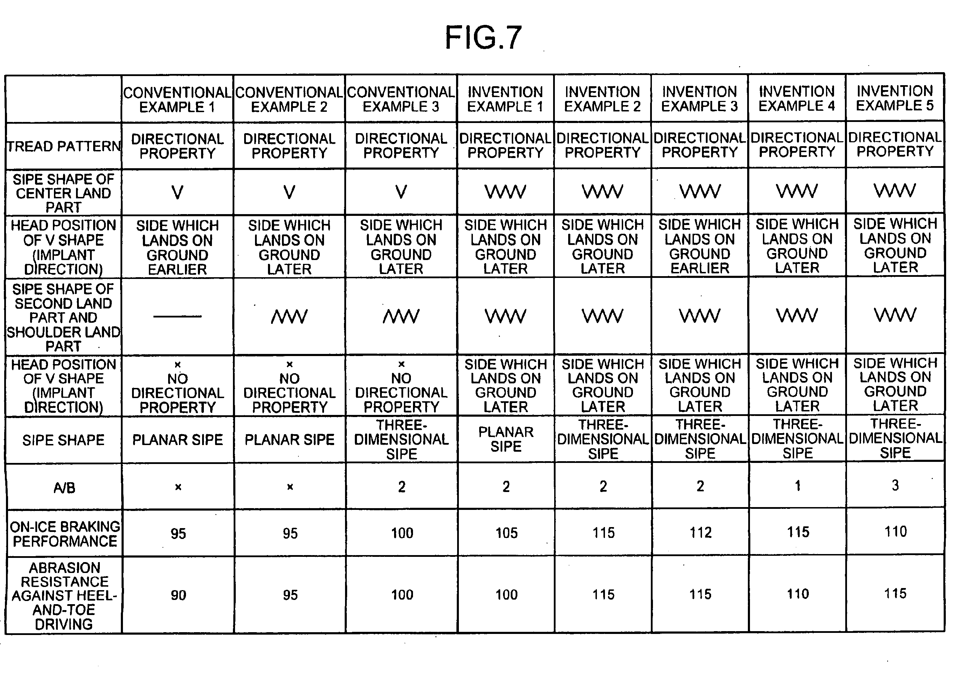

Fig. 1 is a plan view showing a tread of a pneumatic tire according to an embodiment of the present invention. Fig. 2 is a magnified view showing a land part of the pneumatic tire shown in Fig. 1. Fig. 3 is an explanatory view for a sipe of the pneumatic tire shown in Fig. 1. Figs. 4 to 6 are explanatory views showing modifications of the pneumatic tire shown in Fig. 1. Fig. 7 is a table showing a result of a performance test for the pneumatic tire according to the embodiment of the present invention.

First, a pneumatic tire 1 according to the embodiment of the present invention will be explained. The pneumatic tire 1 includes, on its tread part, a plurality of circumferentially-formed main grooves 21 and 22 which run in a circumferential direction of the tire, a plurality of rag grooves 31 and 32 which run in a width direction of the tire, and a plurality of land parts 41 to 43 which are formed by being zoned by the circumferentially-formed main grooves 21 and 22 and the rag grooves 31 and 32. Besides, the pneumatic tire 1 has a directional tread pattern whose rotating direction is specified.

For example, four circumferentially-formed main grooves 21 and 22, and the plurality of rag grooves 31 and 32 which are open to the circumferentially-formed main grooves 21 and 22 are formed in the embodiment (see Fig. 1). The circumferentially-formed main grooves 21 and 22 form five rows of land parts 41 to 43. The land parts 41 to 43 consist of a center land part 41 having a rib shape, and a second land part 42 and a shoulder land part 43 which are formed by a plurality of blocks. Thus, the tread pattern is formed based on a block sequence.

In each of the land parts 41 to 43, a plurality of sipes 5 are formed (see Figs. 1 to 3). Each of the sipes 5 has a substantially zigzag shape formed by a string of multiple V-shaped parts 51 in a plan view of the tread part (on a surface of the tread), so that a falling amount of the land parts 41 to 43 in the rotating direction of the tire differs from that of the land parts 41 to 43 in a reverse direction of the rotating direction of the tire, against an outside force generated when the tire lands on the ground. In other words, the sipe shape has a directional property, thereby providing a difference in the falling amount of the land parts 41 to 43 with respect to the circumferential direction of the tire. Thus, a rigidity of the land parts 41 to 43 is provided with the directional property. Besides, a direction of the V-shaped part 51 of the sipe 5 is set so that the falling amount of the land parts 41 to 43 in the rotating direction of the tire is smaller than that in the reverse direction. Thus, the rigidity of the land parts 41 to 43 in the rotating direction of the tire is enhanced.

For example, the plurality of sipes 5 are formed in each of the center land part 41 having the rib shape, and the second land part 42 and the shoulder land part 43 having the block shape in the embodiment (see Fig. 1). Besides, the sipes 5 are arranged along the circumferential direction of the tire with a predetermined distance provided in each of the land parts 41 to 43, and each sipe 5 runs in the width direction of the tire. In addition, multiple (five) sipes 5 are arranged in each block of the land parts 42 and 43 (see Fig. 2).

Each sipe 5 has a zigzag shape formed by a string of three V-shaped parts 51 (see Fig. 3). In other words, the sipe 5 has not a nearly V shape formed only by a single V shape part but a nearly W shape formed by a string of multiple V-shape parts 51. Therefore, when a virtual line 1 connecting a start point and an end point of the sipe 5 is drawn, a head position (an edge position of a convex side) of each of the V-shaped parts 51 is aligned to one side with respect to the virtual line 1. In such a sipe shape, a mutual supporting effect of the sipes 5 against the outside force when the tire lands on the ground changes according to the direction of the head position of the V-shaped part 51 (a direction of a flexure of the V shape or an implant direction). Thus, the falling amount (rigidity) of the land parts 41 to 43 in the rotating direction of the tire differs from that of the land parts 41 to 43 in the reverse direction, against the outside force generated when the tire lands on the ground (see Figs. 2 and 3). Besides, the direction of the V-shaped part 51 of each sipe 5 is set so that the falling amount of the land parts 41 to 43 in the rotating direction of the tire is smaller than that in the reverse direction. Specifically, the direction of the V-shaped part 51 of each sipe 5 is set so that the head position of the V-shaped part 51 is oriented to one side which lands on the ground later than the other side which lands on the ground earlier.

In each of the land parts 41 to 43, it is only necessary to set the direction of at least a part of the V-shaped parts 51 in the manner described above, and it is not necessary to set the direction of all the V-shaped parts 51 in the manner described above. For example, a sipe which has no impact on a difference in the falling amount, in the circumferential direction of the tire, of the land parts 41 to 43 (for example a sipe which is point-symmetric in the plan view of the tread part or line-symmetric with respect to the virtual line 1, not shown though) may be provided at a part of the land parts 41 to 43.

Besides, it is only necessary that the V-shaped parts 51 are arranged in the manner of being biased to one side of the virtual line 1 and the head position of each of the V-shaped parts 51 is arranged in the manner of being oriented to the side which lands on the ground later in the land parts 41 to 43 in the sipe 5 (see Fig. 3). By this configuration, the falling amount of the land parts 41 to 43 in the rotating direction of the tire becomes small (the rigidity of the land parts 41 to 43 becomes enhanced).
Here, a part of the sipe 5 may step over the virtual line 1, for example (see Fig. 4).

In the pneumatic tire 1, since the falling amount of the land parts 41 to 43 in the rotating direction of the tire is set to be smaller, the rigidity of the land parts 41 to 43 in the rotating direction of the tire is increased. By this configuration, a ground contact pressure generated between the land parts 41 to 43 and the contact ground surface is equalized when a braking is applied on the tire, thereby resulting in an improvement, as an advantage of the present invention, in a braking performance (especially an on-ice braking performance) of the tire. For example, a configuration of arranging, on the land parts, only sipes each being point-symmetric in the plan view of the tread part or line-symmetric with respect to the virtual line 1 does not allow obtaining the effect described above with a difficulty in enhancing the rigidity of the land parts with respect to the rotating direction of the tire.

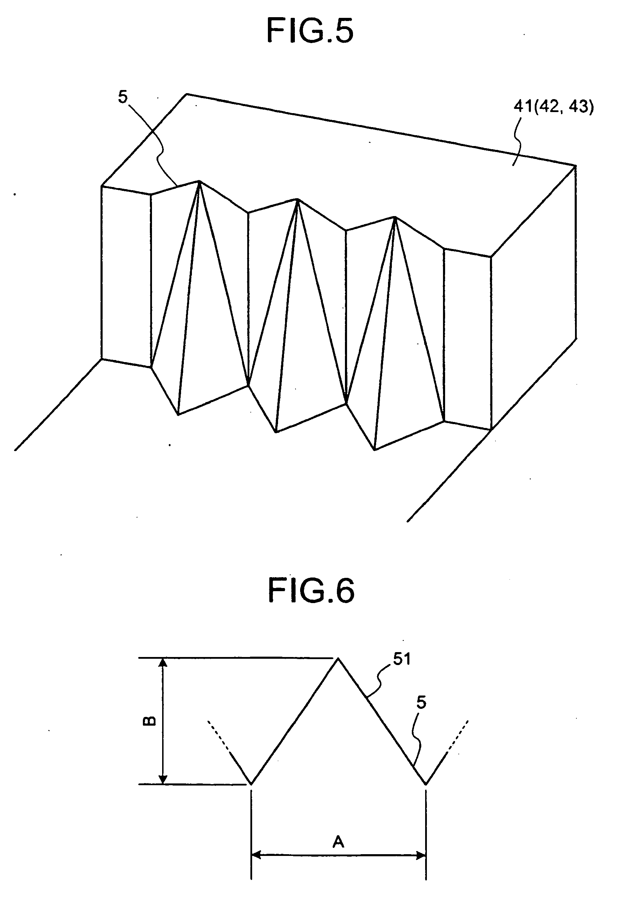

It is preferable in the pneumatic tire 1 that the sipe 5 is a three-dimensional sipe (see Fig. 5). In such a configuration, the land parts 41 to 43 have the three-dimensional sipe and thereby the rigidity of the land parts 41 to 43 is enhanced compared to the configuration that the land part has only a planar sipe. In other words, the falling amount of the land parts 41 to 43 with respect to the rotating direction of the tire is further reduced.
Thus, the ground contact pressure generated between the land parts 41 to 43 and the contact ground surface is equalized when a braking is applied on the tire, thereby resulting in an improvement, as an advantage of the present invention, in the braking performance (especially the on-ice braking performance) of the tire.

Here, the three-dimensional sipe means a sipe whose shape on the tread surface is different from a cross sectional shape in an inner radial direction of the tire. For example, a wall surface of such a sipe has a pyramid shape (a trigonal pyramid). In the land parts 41 to 43 having such three-dimensional sipes, the rigidity of the land parts 41 to 43 is increased since the wall surfaces of opposed sipes sterically engage to each other. Here, the planar sipe means a sipe which has a uniform cross sectional shape in a depth direction of the sipe.

For example, the three-dimensional sipe is adopted on the land parts 41 to 43 all over the tread part in the embodiment (see Figs. 1 and 5). Thus, the rigidity of the land parts 41 to 43 is enhanced all over the tread part.

With regard to a load acting on the land parts 41 to 43 when the tire lands on the ground, the shoulder area of the tread part is subjected to a larger load than the center area of the tread part. Therefore, it is preferable in the pneumatic tire 1 to arrange the sipe 5 described above at least in the land part 43 as the shoulder area of the tread part (see Fig. 1). By this configuration, a grounding property of the tread surface is improved, resulting in an improvement, as an advantage of the present invention, of the braking performance (especially the on-ice braking performance) of the tire. Here, the shoulder area of the tread part means areas located at an outer side in the width direction of the tire when the tread surface is divided into three types of land parts in the width direction of the tire.

The falling amount, when the tire lands on the ground, of the land parts 42 and 43 having the block shape is larger than that of the land part 41 having the rib shape. Therefore, it is preferable in the pneumatic tire 1 to arrange the sipe 5 having the directional property described above at least in the land parts 42 and 43 having the block shape (see Figs. 1 and 2). By this configuration, the falling amount of the land parts 42 and 43 having the block shape is reduced, thereby resulting in an improvement, as an advantage of the present invention, of the braking performance (especially the on-ice braking performance) of the tire.

For example, the second land part 42 and the shoulder land part 43 are constituted by the block sequence in the embodiment (see Figs. 1 and 2). The sipe 5 having the directional property described above is arranged in each block of the land parts 42 and 43. The center land part 41 in which the sipe 5 having the directional property described above is also arranged is constituted by the rib. By this configuration, the rigidity of the land parts 41 to 43 with respect to the rotating direction of the tire is enhanced all over the tread part.

Besides, it is preferable in the pneumatic tire 1 that a relation between a pitch A and an amplitude B of the V shape of the sipe 5 meets B ≤ A ≤ 3B (see Fig. 6). Here, the pitch A of the sipe 5 is a width dimension at a side of an open direction of the V shape and the amplitude B of the sipe 5 is a height dimension in a direction of the flexure of the V shape.

In this configuration, the relation between the pitch A and the amplitude B of the V shape of the sipe 5 is optimized, thereby resulting in, as advantages of the present invention, securing an abrasion resistance of the tire against a heel-and-toe driving and also fairly improving the on-ice braking performance of the tire. For example, when the relation between the pitch A and the amplitude B is A < B, a flexure angle (a cleaving angle) of the sipe 5 becomes an acute angle and thereby the abrasion against the heel-and toe driving is easily caused. In contrast, when the relation between the pitch A and the amplitude B is 3B < A, a pass length (entire length) of the sipe 5 cannot be secured sufficiently and thereby the on-ice braking performance of the tire is not improved easily.

In the embodiment, performance tests concerning i) on-ice braking performance and ii) abrasion resistance against a heel-and-toe driving have been performed with respect to a plurality of pneumatic tires whose respective conditions are different to each other (see Fig. 7). In the performance tests, an pneumatic tire whose size is 265/70R16 112Q is assembled to a rim whose size is 16×8.0J, and an inner pressure of 200 kilopascals and a load specified in JATMA are applied to each pneumatic tire. Then, each pneumatic tire is mounted to a test vehicle.
The test vehicle is a gasoline powered vehicle of 4000 cubic centimeters displacement with four-wheel drive and includes the antilock brake system (ABS).

In the performance test concerning i) on-ice braking performance, the test vehicle runs on two kilometers of circle road (test course) which is an ice floe road. Then, the test vehicle applies a sudden braking at a speed of 40 kilometers per hour and the braking distance is measured. Then, an average value of braking distances in three measurements which resulted in numeric values except for minimum and maximum values among five measurements is calculated. After that, an index evaluation by taking the conventional example 3 as a reference (100) is performed based on the calculation result. Here, a larger numeric value is more preferable in the index evaluation.

In the performance test concerning ii) abrasion resistance against the heel-and-toe driving, an abrasion amount of the land parts (blocks) against the heel-and-toe driving is measured after the test vehicle runs 10000 kilometers. Then, an index evaluation by taking the conventional example 3 as a reference (100) is performed based on the measurement result. Here, a larger numeric value is more preferable in the index evaluation.

Each pneumatic tire used in each performance test has the directional tread pattern and includes the center land part having the rib shape, and the second and shoulder land parts having the block shape (see Fig. 1). Besides, a plurality of sipes are formed in these land parts.

A pneumatic tire of the conventional example 1 has, on its center land part, a sipe whose shape is formed only by a single V shape and whose flexure direction is arranged in the manner of being oriented to a side (the rotating direction of the tire) which lands on the ground earlier than the other side which lands on the ground later (not shown though). Besides, the pneumatic tire of the conventional example 1 has, on the second and the shoulder land parts, a sipe which runs linearly along the width direction of the tire. Here, each sipe is a planar sipe.

A pneumatic tire of the conventional example 2 has, on its center land part, a sipe whose shape is formed only by a single V shape and whose flexure direction is arranged in the manner of being oriented to a side (a reverse rotating direction of the tire) which lands on the ground later than the other side which lands on the ground earlier (not shown though). Besides, the second and the shoulder land parts have a zigzag shape which is point-symmetric or line-symmetric with respect to a virtual line. Here, each sipe is a planar sipe.

In the pneumatic tires 1 according to the invention examples 1 to 5, all sipes 5 of the land parts 41 to 43 have the W shape formed by a string of multiple V-shape parts 51 (see Figs. 1 to 3). In other words, each of the sipes 5 has a shape of being biased to one side of the virtual line 1. Besides, the direction of the V-shaped parts 51 of each sipe 5 is set so that the falling amount of the land parts 41 to 43 in the rotating direction of the tire is smaller than that in the reverse direction. Specifically, the flexure direction of the V-shaped part 51 of the sipe 5 is arranged in the manner of being oriented to the side which lands on the ground later than the other side which lands on the ground earlier (to the reverse side of the rotating direction of the tire).

As shown in the test result, it is proved that the on-ice braking performance of each of the pneumatic tires according to the invention examples 1 to 5 is improved (see Fig. 7). It is also proved, when the invention example 1 and the invention example 2 are compared, that the on-ice braking performance of the tire is improved by adopting the three-dimensional sipe (see Fig. 5) as the sipe 5. Besides, it is proved, when the invention example 2 and the conventional example 3 are compared, that the on-ice braking performance and the abrasion resistance against the heel-and-toe driving of the tire are improved by providing the three-dimensional sipe with the directional property and additionally optimizing the direction of the three-dimensional sipe. It is further proved, when the invention example 2 and the invention example 3 are compared, that the on-ice braking performance of the tire is improved by arranging the flexure part of the V shape of each of the sipes 5 of all land parts 41 to 43 to the side which lands on the ground later. It is still further proved, when the invention example 2, the invention example 4, and the invention example 5 are compared, that the on-ice braking performance and the abrasion resistance against the heel-and-toe driving of the tire are improved by optimizing the relation between the pitch A and the amplitude B of the V shape of the sipe 5.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A pneumatic tire (1) comprising:
a plurality of circumferentially-formed main grooves (21, 22) which run on a tread part in a circumferential direction of the tire (1);
a plurality of rag grooves (31, 32) which run on the tread part in a width direction of the tire (1); and
a plurality of land parts (41 to 43) which are formed by being zoned by the circumferentially-formed main grooves (31, 32) and the rag grooves (31, 32) on the tread part, wherein
a rotating direction of the tire is specified,
a plurality of sipes (5) are formed in each of the land parts (41 to 43) and each of the sipes (5) has a substantially zigzag shape formed by a string of multiple V-shaped parts (51) in a plan view of the tread part, **characterized in that** a falling amount of the land parts in the rotating direction of the tire (1) differs from that of the land parts in a reverse direction, against an outside force generated when the tire (1) lands on a ground, and
a direction of the V-shaped parts (51) of each of the sipes (5) is set so that the falling amount of the land parts (41 to 43) in the rotating direction of the tire (1) is smaller than that in the reverse direction.

2. The pneumatic tire (1) according to claim 1, wherein the sipes (5) are three-dimensional sipes.

3. The pneumatic tire (1) according to claim 1 or 2, wherein the sipes (5) are arranged at least on the land parts (41 to 43) in a shoulder area of the tread part.

4. The pneumatic tire (1) according to any one of claims 1 to 3, wherein the sipes (5) are arranged at least on the land parts (41 to 43) having a block shape.

5. The pneumatic tire (1) according to any one of claims 1 to 4, wherein a relation between a pitch A and an amplitude B of each of the V-shaped parts (51) of each of the sipes (5) meets B ≤ A ≤ 3B.

## Patentansprüche

1. Pneumatischer Reifen (1), der umfasst:
eine Mehrzahl von in Umfangsrichtung ausgebildeten Hauptnuten (21, 22), die auf einem Laufflächenteil in einer Umfangsrichtung des Reifens (1) verlaufen;
eine Mehrzahl von Rag-Nuten (31, 32), die auf dem Laufflächenteil in einer Breitenrichtung des Reifens (1) verlaufen; und
eine Mehrzahl von Territorien (41 bis 43), die ausgebildet sind, indem diese von den in Umfangsrichtung verlaufenden Hauptnuten (31, 32) und den Rag-Nuten (31, 32) auf dem Laufflächenteil in Zonen unterteilt werden, bei dem
eine Drehrichtung des Reifens spezifiziert ist,
eine Mehrzahl von Rillen (5) in jedem der Territorien (41 bis 43) ausgebildet sind und jede der Rillen (5) eine im Wesentlichen zick-zack-förmige Gestalt aufweist, die durch einen Strang von mehreren V-förmigen Teilen (51) in einer Draufsicht des Laufflächenteils ausgebildet sind,
**dadurch gekennzeichnet, dass** ein Nachgiebigkeitsbetrag der Territorien in der Drehrichtung des Reifens (1) sich von dem der Territorien in einer entgegengesetzten Richtung unterscheidet, gegen eine Außenkraft, die erzeugt wird, wenn der Reifen (1) auf einen Boden auftrifft, und
eine Richtung der V-förmigen Teile (51) von jeder der Rillen (5) so festgelegt ist, dass der Nachgiebigkeitsbetrag der Territorien (41 bis 43) in der Drehrichtung des Reifens (1) kleiner als der in der entgegengesetzten Richtung ist.

2. Pneumatischer Reifen (1) nach Anspruch 1, bei dem die Rillen (5) dreidimensionale Rillen sind.

3. Pneumatischer Reifen (1) nach Anspruch 1 oder 2, bei dem die Rillen (5) wenigstens auf den Territorien (41 bis 43) in einem Schulterbereich des Laufflächenteils angeordnet sind.

4. Pneumatischer Reifen (1) nach einem der Ansprüche 1 bis 3, bei dem die Rillen (5) wenigstens auf den Territorien (41 bis 43) angeordnet sind, die eine Blockgestalt aufweisen.

5. Pneumatischer Reifen (1) nach einem der Ansprüche 1 bis 4, bei dem ein Abstand A und eine Amplitude B von jedem der V-förmigen Teile (51) von jeder der Rillen (5) eine Beziehung B ≤ A ≤ 3B erfüllen.

## Revendications

1. Pneu pneumatique (1) comprenant :
une pluralité de rainures principales formées de manière circonférentielle (21, 22) qui courent sur une partie formant bande de roulement dans la direction circonférentielle du pneu (1) ;
une pluralité de rainures orthogonales (31, 32) qui courent sur la partie formant bande de roulement dans une direction de la largeur du pneu (1) ; et
une pluralité de parties de contact (41 à 43) qui sont formées en étant délimitées par les rainures principales formées de manière circonférentielle (31, 32) et par les rainures orthogonales (31, 32) sur la partie formant bande de roulement,
dans lequel
une direction de rotation du pneu est spécifié,
une pluralité de lamelles (5) sont formées dans chacune des parties de contact (41 à 43) et chacune des lamelles (5) a une forme substantiellement en zigzag formée par une série de multiples parties en forme de V (51) dans une vue en plan de la partie formant bande de roulement, **caractérisé en ce qu'**une quantité tombante de parties de contact dans la direction de rotation du pneu (1) diffère de celle des parties de contact dans la direction inverse, contre une force extérieure générée lorsque le pneu (1) repose sur le sol, et
une direction des parties en forme de V (51) de chacune des lamelles (5) est fixé de sorte que la quantité tombante des parties de contact (41 à 43) dans la direction de rotation du pneu (1) est plus petite que celle dans la direction inverse.

2. Pneu pneumatique (1) selon la revendication 1, dans lequel les lamelles (5) sont des lamelles tridimensionnelles.

3. Pneu pneumatique (1) selon la revendication 1 ou 2, dans lequel les lamelles (5) sont agencées au moins sur les parties de contact (41 à 43) dans un épaulement de la partie formant bande de roulement.

4. Pneu pneumatique (1) selon l'une quelconque des revendications 1 à 3, dans lequel les lamelles (5) sont agencées au moins sur les parties de contact (41 à 43) ayant une forme de bloc.

5. Pneu pneumatique (1) selon l'une quelconque des revendications 1 à 4, dans lequel la relation entre un pas A et une amplitude B de chacune des parties en forme de V (51) de chacune des lamelles (5) satisfait à B ≤ A ≤ 3B.
